# EUROPEAN PATENT SPECIFICATION

(11) **EP 2 901 658 B1**
(45) Date of publication and mention of the grant of the patent: **28.06.2017**
(21) Application number: 13803234.7
(22) Date of filing: 25.09.2013
(51) Int. Cl.: H04L 29/08

(54) **REQUEST-AGNOSTIC CACHING FOR A DATA RESOURCE COLLECTION**
ANFRAGENAGNOSTISCHE ZWISCHENSPEICHERUNG FÜR EINE DATENQUELLENSAMMLUNG
MISE EN ANTÉMÉMOIRE INDIFFÉRENTE AUX REQUÊTES POUR UNE COLLECTION DE RESSOURCES DE DONNÉES

(30) Priority: 27.09.2012 US 201213628953
(43) Date of publication of application: 05.08.2015
(73) Proprietor: Telefonaktiebolaget LM Ericsson (publ), 164 83 Stockholm (SE)
(72) Inventor: JOONG, Donald, Montreal, Québec H1R 3Z5 (CA); KATYAL, Ganish, Ville Saint Laurent, Québec H4L4R1 (CA); GEORGESCU, Sorin-Marian, Mount Royal, Québec H3R 1B3 (CA)
(74) Representative: Ericsson
(86) International application number: PCT/IB2013/058856
(87) International publication number: WO 2014/049539

(56) References cited:
- EP-A1- 2 400 720
- WO-A2-2006/057852
- US-A1- 2003 018 639
- US-A1- 2010 267 403
- US-B1- 7 130 890

## Description

### TECHNICAL FIELD

The present invention generally relates to caching performed by an intermediate proxy node via which client devices request data resources from a data resource server, and particularly relates to caching data resources in a request-agnostic manner.

### BACKGROUND

A proxy node serves as an intermediary between client devices and a data resource server. In this role, the proxy node intercepts requests from client devices for data resources, such as files, services, web pages, data objects, or the like. The proxy node services any given request from a client device by forwarding the request to the data resource server, receiving the response to that request from the data resource server, and then relaying the response to the requesting client device.

Configuring a proxy node to serve as an intermediary in this way proves advantageous when the proxy node caches server responses. In this regard, after the proxy node services a particular request, the proxy node stores the response to that request in a cache on a request-by-request basis (i.e., the cache maps requests to corresponding responses). If the proxy node thereafter receives that same request again, the proxy node quickly returns the response to that request as stored in the cache rather than redundantly forwarding the request to the data resource server. The proxy node thereby accelerates resource requests from the perspective of the client devices, reduces the bandwidth required to forward requests to the data resource server, and reduces processing requirements on the data resource server.

US patent application publication no. 2003/0018639 A1 relates to clustering and prefetching data objects. A technique for prefetching data objects on a disk storage device comprises receiving a request for a data object in a cluster, determining from a log a probability that at least one other data object in the cluster may be subsequently requested, and, in response to the probability being not less than a predetermined value, retrieving both the requested data object and the at least one other data object.

Further prior art is known from WO publication no. 2006/057852 A1.

There still remains a need, however, for fully realizing the advantages of proxy node caching in all contexts.

### SUMMARY

Teachings herein advantageously provide efficient proxy node caching in contexts where data resources are organized into different data resource collections. Rather than naively caching data resource server responses on a request-by-request basis, a proxy node herein intelligently caches data resources in a request-agnostic manner. As one example, this enables the proxy node to efficiently respond to a request for a subset of a data resource collection using data resources cached in response to a different request for a different subset of that collection.

More specifically, some embodiments herein include a method performed by an intermediate proxy node via which client devices request data resources from a data resource server. The data resources in these embodiments are organized into different data resource collections by the data resource server. The method includes receiving from a client a first request (e.g., an HTTP request) for a first subset of a data resource collection and, responsive to receiving such first request, determining that the collection is not stored in a request-agnostic cache maintained by the proxy node. Responsive to this determination, the method further entails retrieving the collection from the data resource server. The method then includes extracting the requested first subset from the retrieved data resource collection and selectively returning that subset to the client device as a response to the first request. Finally, the method entails storing the data resource collection in the request-agnostic cache for serving other requests from the same or a different client device for data resources in the data resource collection, including a second request for a second subset of the data resource collection that is different than the first subset. The method also includes receiving from a different client device the second request for the second subset of the data resource collection. In one embodiment, for example, the first request and the second request are received from different types of client devices with at least one of different display, memory, and processing capabilities. Regardless, in this case, the method entails, responsive to receiving the second request, extracting the second subset from the data resource collection that was retrieved from the data resource server and stored in the request-agnostic cache in response to the first request for the first subset, and selectively returning the second subset extracted from the data resource collection as a response to the second request.

In one or more embodiments, receiving a request for a subset comprises receiving a request for a data resource collection in conjunction with one or more constraining parameters that constrain a response to the request to the subset. In this case, retrieving the data resource collection from the data resource server comprises sending the request for the data resource collection without the one or more constraining parameters towards the data resource server.

In one such embodiment, selectively returning the subset of the data resource collection as a response to the request thus comprises processing the data resource collection received from the data resource server according to the one or more constraining parameters in order to extract the subset from the data resource collection. This extracted subset is then returned as the response to the request.

One or more alternative embodiments herein include a different method performed by the intermediate proxy node. According to this different method, processing at the proxy node includes receiving from a client device a first request for a first subset of a data resource collection. Processing also includes identifying a first part of the first subset as being stored in a request-agnostic cache maintained by the intermediate proxy node and a second part of the first subset as not being stored in the request-agnostic cache. Processing further entails retrieving the first part of the first subset from the request-agnostic cache and the second part of the first subset from the data resource server, and then returning to the client device the first subset as formed from the first and second parts retrieved.

In at least some embodiments, before the request for the first subset is received, the first part of the first subset is retrieved from the data resource server and stored in the request-agnostic cache in response to one or more requests for one or more different subsets. Similarly, the method further involves storing the second part of the first subset in the request-agnostic cache for serving other requests from the same or a different client device for data resources in the data resource collection. This includes a second request for a second subset of the data resource collection that is different than the first subset.

In one embodiment, receiving the request for the first subset comprises receiving a request for the data collection in conjunction with one or more constraining parameters that constrain a response to the request to the first subset. In this case, retrieving the second part of the first subset from the data resource server comprises selectively sending the request for the data resource collection towards the data resource server with those of the constraining parameters that are to constrain a response to the second part of the first subset, but without any of the constraining parameters that are to constrain a response to the first part of the first subset.

Embodiments herein also include apparatus configured to implement these methods.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a system that includes an intermediate proxy node configured according to one or more embodiments.
Figure 2 is a logic flow diagram of a method implemented by an intermediate proxy node according to one or more embodiments.
Figure 3 is a call flow diagram illustrating call flow processing according to one or more embodiments.
Figure 4 is a logic flow diagram of a method implemented by an intermediate proxy node according to one or more other embodiments.
Figure 5 is a call flow diagram illustrating call flow processing according to one or more other embodiments.
Figure 6 is a block diagram of an intermediate proxy node according to one or more embodiments.
Figure 7 is a block diagram illustrating functional details associated with the one or more processing circuits of the intermediate proxy node according to one or more embodiments.

### DETAILED DESCRIPTION

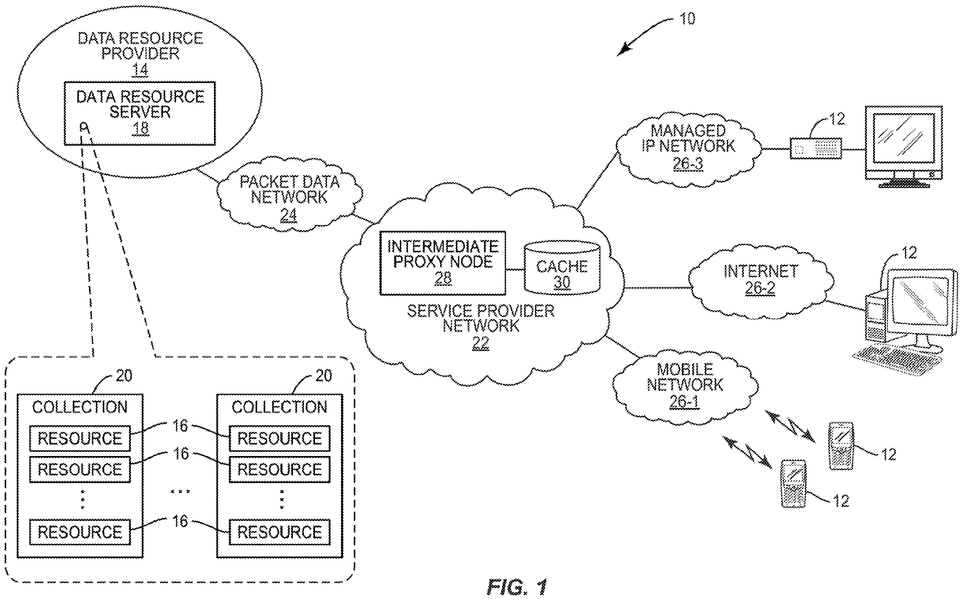

Figure 1 depicts a data resource delivery system 10 according to one or more embodiments. The system 10 includes one or more client devices 12 that send requests towards a data resource provider 14 for data resources 16, such as files, web pages, data objects, or the like. A data resource server 18 maintained by the resource provider 14 organizes these data resources 16 into different data resource collections 20. In some embodiments, for example, the data resource server 18 organizes data resources 16 into a given collection 20 based on those data resources 16 being associated with a common property, attribute, or characteristic. The server 18 in some embodiments is capable of including any given data resource 16 within one or more collections 20. Regardless, the data resource server 18 delivers requested data resources 16 to a service provider network 22 via a packet data network 24. The service provider network 22 in turn delivers the requested data resources 16 to the one or more client devices 12 over one or more delivery networks 26, such as a mobile communication network 26-1, the Internet 26-2, or a managed Internet Protocol (IP) network 26-3.

The client devices 12 more specifically request data resources 16 from the data resource server 18 via an intermediate proxy node 28. Figure 1 shows this proxy node 28 as being included in the service provider network 22. The proxy node 28 notably maintains a request-agnostic cache 30 for storing data resources 16 retrieved from the data resource server 18. As used herein, the cache 30 is request-agnostic in the sense that the cache 30 stores data resources 16 independently of the requests for those resources 16.

By intelligently caching data resources 16 in this request-agnostic manner, rather than naively caching data resources as responses to requests, the proxy node 28 advantageously provides caching that is efficient even when client devices 12 request subsets of a data resource collection 20 rather than the entire collection 20. Indeed, in this case, the request-agnostic cache 30 stores any data resources 16 within the collection 20 independently of whether those resources 16 belong to different requested subsets of the collection 20. This enables the proxy node 28 to efficiently respond to a request for a subset of the collection 20 using data resources 16 cached in response to a different request for a different subset of that collection 20. In this sense, then, the cache's storage of data resources 16 in a request-agnostic manner intelligently exploits the resource server's organization of the data resources 16 into different collections 20.

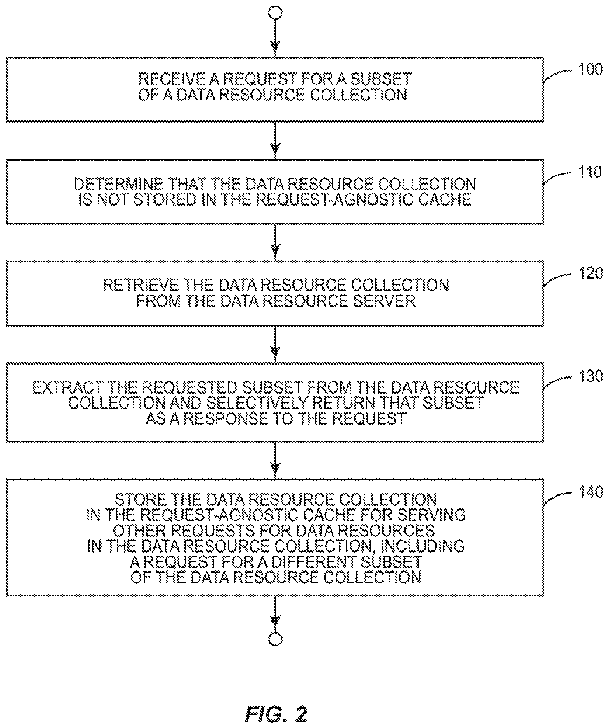

In one or more embodiments of request-agnostic caching, for example, the proxy node 28 proactively caches a data resource collection 20 responsive to a request for a subset of that collection 20. The proxy node 28 does so in anticipation of receiving other requests for other data resources 16 that are not in the requested subset but that are nonetheless in the collection 20. This means that the request-agnostic cache 30 effectively stores data resources 16 on a collection basis rather than on a request basis. Figure 2 illustrates processing performed by the proxy node 28 according to such embodiments.

As shown in Figure 2, processing at the proxy node 28 includes receiving a request for a subset of a data resource collection 20 (Block 100). Responsive to receiving this request, processing further includes determining that the data resource collection 20 is not stored in the request-agnostic cache 30 maintained by the proxy node 28 (Block 110). In at least some embodiments, the proxy node 28 determines that the collection 20 is not stored in the request-agnostic cache 30 by determining that the requested subset of the collection 20 is not stored in the cache 30. In other embodiments, though, the proxy node 28 determines that the collection 20 is not stored in the request-agnostic cache 30 by determining that at least one data resource 16 outside the requested subset but included in the collection 20 is not stored in the cache 30.

Regardless, responsive to determining that the collection 20 is not stored in the request-agnostic cache 30, processing at the proxy node 20 entails retrieving the collection 20 from the data resource server 18. That is, even though only a subset of the collection 20 was requested, the proxy node 20 proactively retrieves the complete collection 20. Having retrieved the collection 20 in this way, processing at the proxy node 28 includes extracting the requested subset from the retrieved collection 20 and selectively returning that subset as a response to the request (Block 130). Processing also entails storing the collection 20 in the request-agnostic cache 30 for serving other requests for data resources 16 in the collection 20, including a request for a different subset of the collection 20 (Block 140). In some embodiments, for example, the proxy node 20 caches the collection 20 in anticipation of receiving these other requests in the future, from either the same client device 12 or a different client device 12 than the one that requested the subset.

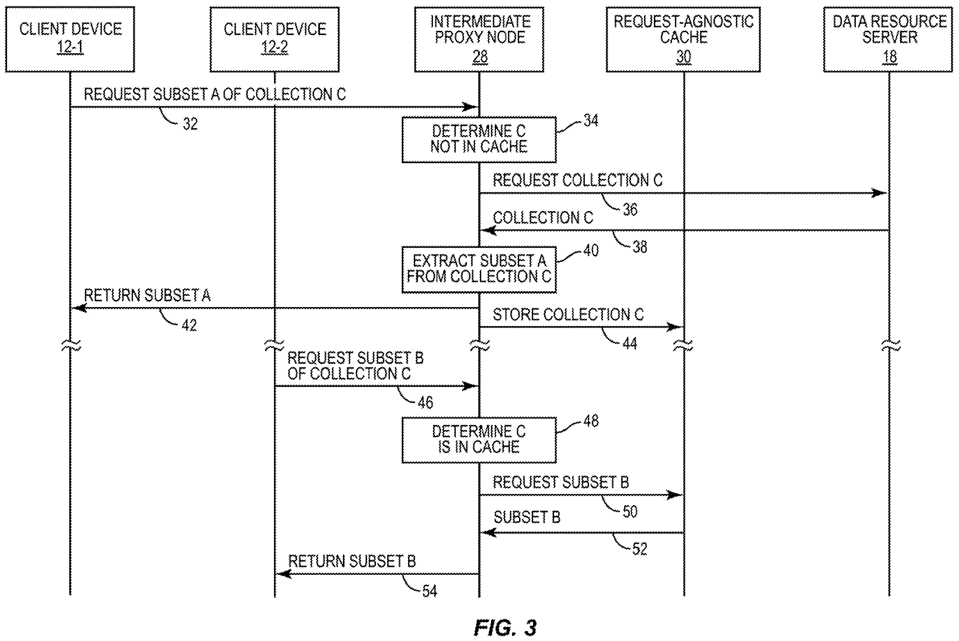

Figure 3 illustrates one example of embodiments where proactive collection caching proves advantageous for servicing requests from different client devices 12 for different subsets of the same collection 20. As shown in Figure 3, a first client device 12-1 sends a request (e.g., a Hypertext Transfer Protocol, HTTP, request) to the intermediate proxy node 28 for subset A of a data resource collection C (Step 32). Responsive to this request, the proxy node 28 determines that collection C is not stored in the request-agnostic cache 30 (Step 34). In some embodiments, this determination entails querying the cache 30 (not shown) for whether or not the collection 30 is stored therein. In other embodiments, this determination involves inspecting information maintained at the intermediate proxy node 28 that tracks or otherwise identifies data resources 16 stored in the cache 30. As one example, such information includes a table or other data structure that lists the data resources 16 stored in the cache 30. Regardless, upon determining that the collection C is not stored in the cache 30, the proxy node 28 sends a request to the data resource server 18 for the complete collection C, rather than just for subset A of the collection C (Step 36). The proxy node 28 does so in anticipation of receiving a future request for at least one data resource 16 not included in subset A. Upon receiving collection C in response (Step 38), the proxy node 28 extracts subset A from the received collection C (Step 40) and selectively returns the extracted subset A to client device 12-1 as requested (Step 42). The proxy node 28 also stores the received collection C in the request-agnostic cache 30 (Step 44). Although Figure 3 shows that the proxy node 28 stores collection C after returning subset A to client device 12-1, the proxy node 28 in other embodiments stores collection C before returning subset A.

In at least some embodiments, the request-agnostic cache 30 stores collection C for a predetermined amount of time. Once this amount of time expires, collection C as stored in the cache 30 is considered "dirty" or "stale" and is therefore discarded from the cache 30. In one or more embodiments, though, a request for one or more data resources 16 in collection C resets the expiration time of collection C as stored in the cache 30.

Regardless, continuing the example of Figure 3, a second client device 12-2 later sends a request to the intermediate proxy node 28 for subset B of collection C, where subset B differs from subset A. Even though the proxy node 28 has not heretofore received a request for subset B, the proxy node 28 intelligently determines that the request concerns collection C and that collection C has been (and still is) stored in the request-agnostic cache 30 due to having previously received a different request concerning collection C (Step 48). Rather than sending a request to the data resource server 18 for subset B, therefore, the proxy node 28 simply requests and receives subset B from the request-agnostic cache 30 (Steps 50 and 52). Although not shown, the proxy node 28 in other embodiments alternatively requests and receives the complete collection C from the cache 30 and processes collection C in order to retrieve subset B from that collection. In either case, though, the proxy node 28 effectively extracts subset B from the collection C stored in the cache 30. Having extracted subset B in this way, the proxy node 28 selectively returns that subset B to the second client device 12-2 as requested (Step 54).

Note that proactive collection caching as described in Figure 3 proves advantageous for responding to the request for subset B even if subset B is mutually exclusive of the previously requested subset A. Nonetheless, in some embodiments, at least one data resource 16 in subset B is also included in subset A. In fact, in one such embodiment, subset A is actually a subset of subset B.

Consider an example where the first and second client devices 12-1 and 12-2 are different types of devices, at least in the sense that they have different display, memory, and/or processing capabilities. In one embodiment, for instance, the first client device 12-1 (e.g., as a mobile terminal) has relatively limited display, memory, and/or processing capabilities, while the second client device 12-2 (e.g., as a set-top-box) has relatively expanded display, memory, and/or processing capabilities. Given the greater capabilities of the second client device 12-2, the device 12-2 is configured to request subsets that are larger in size than that of the subsets requested by the first client device 12-1.

In one practical example, the data resources 16 comprise splash images (i.e., "posters") associated with different videos available for viewing in an IPTV system. The data resource server 18 organizes these images into different collections that correspond to genres of the associated videos. For instance, one collection of images includes those images associated with an "Action / Adventure" genre of videos, while another collection of images includes those images associated with a "Kids" genre of videos, etc. Given the more limited capabilities of the first device 12-1, the device 12-1 at any given time requests a smaller subset of images for presenting the videos available within a given genre, while the second device 12-2 requests a larger subset of images. This means that the first and second devices 12-1, 12-2 will generate different requests for different subsets of images while browsing any given genre of videos. Despite this difference, the proxy node 28 advantageously responds to the second client device's request for a larger subset using the collection of images cached in response to the first client device's request for a smaller subset.

In at least some of these IPTV embodiments, and embodiments applicable in other contexts as well, a client device 12 requests a subset of a data resource collection 20 by sending a request for the collection 20 in conjunction with one or more constraining parameters. These constraining parameters constrain a response to the request to the subset. When the collection 20 is not stored in the request-agnostic cache 30, the proxy node 28 retrieves the collection 20 from the data resource server 18 by sending the request for the collection 20 without the one or more constraining parameters towards the server 18. That is, the proxy node 28 intelligently modifies the request received from the client device 12 so that the request excludes the one or more constraining parameters and then sends that modified request towards the data resource server 18. This way, the proxy node 28 forces the server 18 to naively respond with the complete collection 20, even though unbeknownst to the server 18 the client device 12 only requested a subset of that collection 20.

When the proxy node 28 modifies the request in order to remove the one or more constraining parameters, the proxy node 28 stores those parameters in memory as having been sent in conjunction with the request. Then, responsive to receiving the collection 20 to which the request concerned from the data resource server 18, the proxy node 28 stores the collection 20 in the cache 30 and filters or processes the collection 20 according to the stored constraining parameters in order to extract the requested subset from the collection 20. In some sense, then, the proxy node 28 herein is advantageously equipped with intelligence or logic similar to that at the data resource server 18 for examining, understanding, and processing the constraining parameters sent with a request. Equipped with this intelligence, the proxy node 28 can exploit the server's organization of data resources into collections in order to efficiently cache those resources 16. In any event, upon applying this logic in order to extract the requested subset from the retrieved collection 20, the proxy node 28 returns that extracted subset to the client device 12 as the response to the request. The proxy node 28 handles subsequent requests for different subsets of the collection 20 in an analogous manner; that is, by processing the collection 20 as stored in the cache 30 according to the respective constraining parameters sent in conjunction with those requests.

In one embodiment, for example, the request comprises an HTTP request. In this case, the request is represented by a Uniform Resource identifier (URI) whose destination address indicates a data resource collection 20 associated with the request and whose HTTP query string indicates the one or more constraining parameters. Consider for instance a URI of http://a.com/example?fetch=C₁,C₂. The destination address "http://a.com/example" represents a request for a data resource collection "example." The HTTP query string "fetch= C₁,C₂" indicates the one or more constraining parameters. These parameters constrain a response to the request to a subset that includes the resources indexed as "C₁" and "C₂" within the "example" collection.

When the proxy node 28 receives this URI from a client device 12 and the collection "example" is not stored in the cache 30, the proxy node 28 modifies the URI to simply be "http://a.com/example" without the constraining parameters indicated by the HTTP query string. Responsive to sending this modified URI towards the data resource server 18, the proxy node 28 receives and caches the complete "example" collection from the server 18, which may include for instance resources C₁-C₃₀. The proxy node 28 then processes the collection 20 according to the constraining parameters indicated by the HTTP query string in order to extract the "C₁" and "C₂" resources and selectively return those extracted resources to the client device 12.

Consider now an example where the proxy node 28 thereafter receives a different URI of http://a.com/example?fetch= C₁,C₂,C₃,C₄ from the same or a different client device 12. The proxy node 28 in this case recognizes the URI as concerning the "example" collection and determines that this collection 20 has been (and still is) stored in the request-agnostic cache 30. Thus, rather than requesting resources C₁-C₄ from the data resource server 18, the proxy node 28 extracts those resources from the "example" collection stored in the request-agnostic cache 30 and selectively returns those extracted resources.

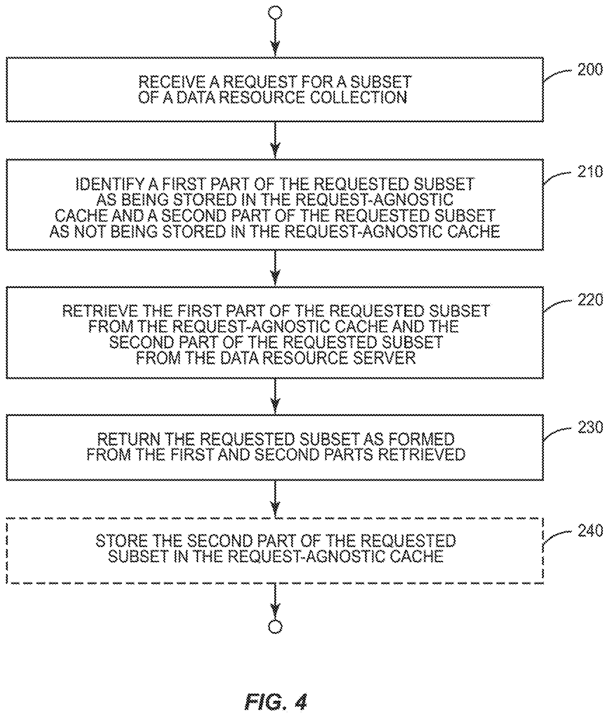

Rather than proactively retrieving resources 16 before they have been requested in order to cache a complete collection 20, as described above, the proxy node 28 in alternative embodiments herein reactively builds such a cache over time based on retrieving resources 16 as they are requested. That is, the request-agnostic cache 30 still generally stores data resources 16 on a collection basis as described above, but any given collection 20 in the cache 30 is populated over time responsive to requests for multiple different subsets of the collection 20 rather than responsive to a single request for any subset of the collection 20. Thus, responsive to any given request, some of the requested data resources 16 may be stored in the request-agnostic cache 30 while other requested data resources 16 may be absent from the cache 30. Figure 4 illustrates processing performed by the proxy node 28 in this case.

As shown in Figure 4, processing at the proxy node 28 for this reactive collection caching includes receiving a request for a subset of a data resource collection 20 (Block 200). Processing then entails identifying a first part of the requested subset as being stored in the request-agnostic cache 30 maintained by the proxy node 28 and a second part of the requested subset as not being stored in the cache 30 (Block 210). In some embodiments, for example, this entails evaluating the request to determine which resources 16 are requested, and querying the cache 30 to determine which of those requested resources 16 are stored in the cache 30 and which are not. In any event, processing at the proxy node 28 further entails retrieving the first part of the requested subset from the request-agnostic cache 30 and the second part of the requested subset from the data resource server 18 (Block 220). In this way, the proxy node 28 intelligently involves the data resource server 18 only to the extent needed to retrieve the non-cached resources 16 (i.e., the second part of the subset), without burdening the server 18 to redundantly provide already cached resources 16 (i.e., the first part of the subset). Finally, processing includes returning the requested subset as formed from the first and second parts retrieved (Block 230).

In one or more embodiments, the first part of the requested subset was stored in the request-agnostic cache 30 because the proxy node 28 had previously retrieved those resources 16 from the data resource server 16 in response to one or more requests for one or more different subsets of the collection 20. And, when the proxy node 28 retrieved those resources 16, the node 28 stored them in the request-agnostic cache 30 in anticipation of receiving future requests concerning the collection 20.

In the same manner, therefore, processing at the proxy node 28 in one or more embodiments further entails storing the second part of the requested subset in the request-agnostic cache 30 (Step 240). The proxy node 28 does so in anticipation of serving other requests for data resources 16 in the collection 20, including a request for a different subset of the collection 20.

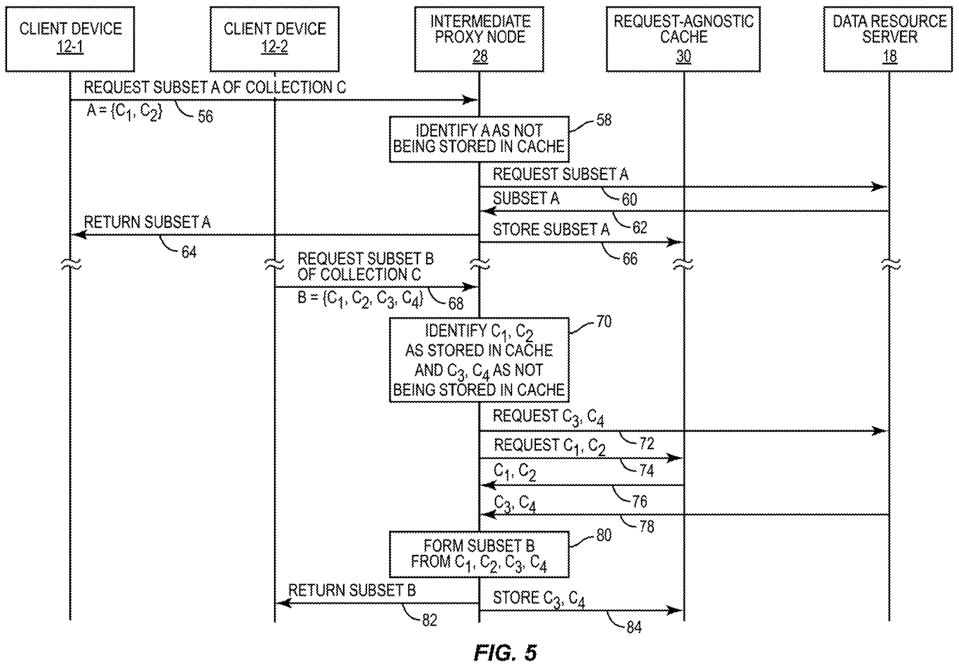

Figure 5 illustrates one example of embodiments where reactive collection caching proves advantageous for servicing requests from different client devices 12 for different subsets of the same collection 20. As shown in Figure 5, a first client device 12-1 sends a request (e.g., an HTTP request) to the intermediate proxy node 28 for subset A of a data resource collection C (Step 56). In this example, subset A includes data resources C₁ and C₂, and the collection C includes resources C₁-C₃₀- Responsive to this request, the proxy node 28 identifies that none of the resources in subset A are stored in the cache 30 (Step 58). The proxy node 28 therefore reactively sends a request to the data resource server 18 for subset A of the collection C, as opposed to sending a request for the complete collection C as described above (Step 60). Upon receiving subset A in response (Step 62), the proxy node 28 returns subset A to client device 12-1 as requested (Step 64) and stores subset A in the request-agnostic cache 30 (Step 66). Although Figure 5 shows that the proxy node 28 stores subset A after returning subset A to client device 12-1, the proxy node 28 in other embodiments stores subset A before returning subset A.

A second client device 12-2 later sends a request to the intermediate proxy node 28 for subset B of collection C (Step 68). Subset B differs from subset A because subset B includes not only data resources C₁ and C₂, but also includes data resources C₃ and C₄. Even though the proxy node 28 has not heretofore received a request for subset B, the proxy node 28 intelligently identifies a first part of subset B (namely, C₁ and C₂) as being stored in the cache 30 and a second part of subset B (namely, C₃ and C₄) as not being stored in the cache 30. Accordingly, rather than sending a request to the data resource server 18 for the complete subset B (or the complete collection C), the proxy node 28 requests and receives just the second part of subset B from the data resource server 18 (Steps 72 and 78). And, after requesting and receiving the first part of subset B from the request-agnostic cache 30 (Steps 74 and 76), the proxy node 28 itself forms subset B from the first and second parts retrieved (Step 80). The proxy node 28 then returns subset B to client device 12-2 (Step 82) and stores the second part of subset B in the cache 30 (Step 84).

Note that, unlike proactive collection caching, reactive collection caching as just described proves advantageous for responding to the request for subset B only if subset B at least partially overlaps with the previously requested subset A (or any other previously requested subsets). But, reactive collection caching proves more efficient than proactive collection caching in circumstances where, in hindsight, not all data resources 16 within a given collection 20 actually needed to be retrieved.

Also note that the proxy node 28 processes a request differently in reactive collection caching embodiments than in proactive collection caching embodiments, particularly when the request for a subset comprises a request for a collection 20 in conjunction with one or more constraining parameters. In this regard, when the proxy node 28 identifies the second part of the requested subset as not being stored in the request-agnostic cache 30, the proxy node 28 retrieves that second part from the data resource server 18 by selectively sending the request for the collection 20 towards the data resource server 18 with those of the constraining parameters that are to constrain a response to the second part of the subset, but without any of the constraining parameters that are to constrain a response to the first part of the subset. That is, the proxy node 28 intelligently modifies the request received from the client device 12 so that the request excludes the one or more constraining parameters associated with the first part, but still includes the one or more constraining parameters associated with the second part. The proxy node 28, for example, would modify an HTTP request for subset B in Figure 5 from http://a.com/example?fetch= C₁,C₂,C₃,C₄ to http://a.com/example?fetch= C₃,C₄. Regardless, the proxy node 28 then sends that modified request towards the data resource server 18. This way, the proxy node 28 forces the server 18 to naively respond with only the second part of the requested subset, even though unbeknownst to the server 18 the client device 12 actually requested the first part of the subset as well.

Although the above embodiments discussed the request-agnostic cache 30 as if it was the only cache in the system 10, those skilled in the art will appreciate that in other embodiments other caches also store data resources 16. In at least one embodiment, though, the request-agnostic cache 30 is the only cache that implements proactive or reactive collection caching as described above. In one such embodiment, the request-agnostic cache 30 is closest cache to the data resource server 18. In still other embodiments, though, multiple different ones of the caches implement collection caching, across multiple different networks (i.e., not just in the service provider network 22). In this case, different proxy nodes 28 at different communicative distances from a given client device 12 have different sizes of caches 30 and/or different data staleness times.

In at least some embodiments, the proxy node 28 herein comprises an IPTV proxy in an IPTV system 10, such as a multi-screen IPTV system. Of course, those skilled in the art will appreciate that embodiments herein prove advantageous in many other contexts as well.

Moreover, in one or more embodiments, data resources 16 as used herein comprise public data, rather than private data. Public data in this case is capable of being freely shared by end-users and network nodes without security risk. Private data by contrast belongs specifically to an end-user and is not so freely shared. Still further, the term "subset" is used herein in its general sense to refer to a part or portion of a larger set. This contrasts with the mathematical or technical sense of the term in which a subset may be the same as the set. In mathematical terms, a "subset" as used herein is really a "proper subset."

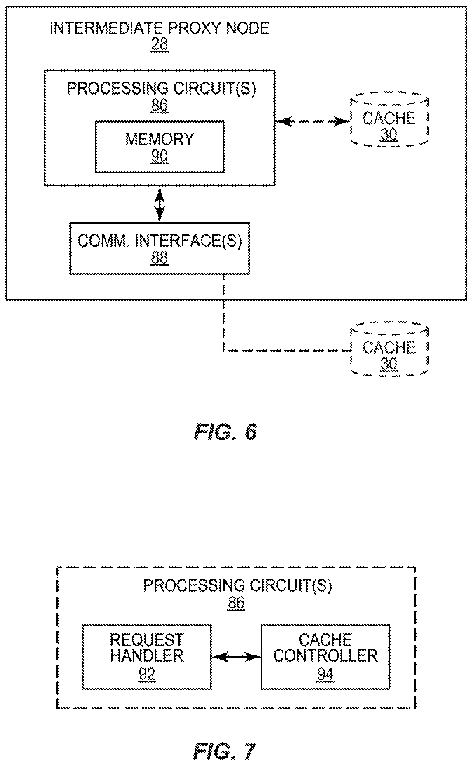

In view of the various modifications and alternatives discussed above, those skilled in the art will appreciate that Figure 6 illustrates an apparatus configured to carry out the techniques described above. Specifically, Figure 6 depicts an intermediate proxy node 28 configured to perform the method shown in either Figure 2 or Figure 4. The proxy node 28 includes one or more communication interfaces 88 and one or more processing circuits 86. The one or more communication interfaces 88 use known signal processing techniques, typically according to one or more communication standards, for communicatively coupling the node 28 to other network nodes in the service provider network 22 as well as nodes in other networks. That is, the one or more interfaces 88 are configured to format digital data and condition a communication signal, from that data, for transmission over a communications link.

The one or more processing circuits 86 are configured to extract digital data from the one or more interfaces 88 for processing, and to generate digital data for transmission over the one or more interfaces 88. More particularly, the one or more processing circuits 86 comprise one or several microprocessors, digital signal processors, and the like, as well as other digital hardware (not shown). The one or more processing circuits 86 also include memory 90. Memory 90, which may comprise one or several types of memory such as read-only memory (ROM), random-access memory, cache memory, flash memory devices, optical storage devices, etc., stores program code for executing one or more data communications protocols and for carrying out one or more of the techniques described herein. Memory 90 further stores program data for carrying out such techniques, and also stores various parameters and/or other program data for controlling the operation of the proxy node 28.

Of course, not all of the steps of the techniques described herein are necessarily performed in a single microprocessor or even in a single module. Thus, Figure 7 presents a more generalized view of a proxy node 28 configured to carry out the methods shown in either Figure 2 or Figure 4. This proxy node 28 may have a physical configuration that corresponds directly to processing circuits 86, for example, or may be embodied in two or more modules or units. In either case, the proxy node 28 includes a request handler 92 and a cache controller 94. The request handler 92 is configured to perform steps in the methods described above related to receiving a request and returning a response to that request. The cache controller 94 is configured to perform steps in the methods related to determining whether resources 16 are stored in the cache 30, retrieving resources 16 from the cache 30, and storing resources 16 in the cache 30.

Those skilled in the art will of course recognize that the present invention may be carried out in other ways than those specifically set forth herein without departing from essential characteristics of the invention. The present embodiments are thus to be considered in all respects as illustrative and not restrictive, and all changes coming within the meaning and equivalency range of the appended claims are intended to be embraced therein.

## Claims

1. A method implemented by an intermediate proxy node (28) via which client devices (12) request data resources (16) from a data resource server (18) that organizes the data resources (16) into different data resource collections (20), the method comprising:
receiving (100) from a client device (12) a first request for a first subset of a data resource collection (20);
responsive to receiving the first request, determining (110) that the data resource collection (20) is not stored in a request-agnostic cache (30) maintained by the intermediate proxy node (28);
responsive to said determination, retrieving (120) the data resource collection (20) from the data resource server (18);
extracting (130) the requested first subset from the retrieved data resource collection (20) and selectively returning that first subset to the client device (12) as a response to the first request;
storing (140) the data resource collection (20) in the request-agnostic cache (30) for serving other requests from the same or a different client device (12) for data resources (16) in the data resource collection (20);
receiving from a different client device (12) a second request for a second subset of the data resource collection (20) that is different than the first subset;
responsive to receiving the second request, extracting the second subset from the data resource collection (20) that was retrieved from the data resource server (18) and stored in the request-agnostic cache (30) in response to the first request for the first subset; and
selectively returning the second subset extracted from the data resource collection (20) as a response to the second request.

2. The method of claim 1, wherein the first and second requests are received from different types of client devices (12) with at least one of different display, memory, and processing capabilities.

3. The method of claim 1 or 2, wherein receiving the first request for the first subset comprises receiving from the client device (12) a request for the data resource collection (20) in conjunction with one or more constraining parameters that constrain a response to the first request to the first subset, and wherein retrieving the data resource collection (20) from the data resource server (18) comprises sending the first request for the data resource collection (20) without the one or more constraining parameters towards the data resource server (18).

4. The method of claim 3, wherein selectively returning the first subset of the data resource collection (20) to the client device (12) as a response to the first request comprises:
processing the data resource collection (20) received from the data resource server (18) according to the one or more constraining parameters in order to extract the first subset from the data resource collection (20); and
returning the extracted first subset as the response to the first request.

5. The method of any of claims 1 to 4, wherein the first request comprises an HTTP request; and/or
wherein the data resources (16) comprise splash images associated with different videos available for viewing in an IPTV system, and wherein the data resource server (18) organizes the splash images into different collections (20) that correspond to genres of the associated videos.

6. An intermediate proxy node (28) via which client devices (12) request data resources (16) from a data resource server (18) that organizes the data resources (16) into different data resource collections (20), the intermediate proxy node (28) comprising:
one or more communication interfaces configured to communicatively couple the intermediate proxy node (28) to a client device (12) and the data resource server (18); and
one or more processing circuits configured to:
receive (100) from the client device (12), via the one or more communication interfaces, a first request for a first subset of a data resource collection (20);
responsive to receiving the first request, determine (110) that the data resource collection (20) is not stored in a request-agnostic cache (30) maintained by the intermediate proxy node (28);
responsive to said determination, retrieve (120) the data resource collection (20) from the data resource server (18);
extract (130) the requested first subset from the retrieved data resource collection (20) and selectively return that first subset to the client device (12), via the one or more communication interfaces, as a response to the first request;
store (140) the data resource collection (20) in the request-agnostic cache (30) for serving other requests from the same or a different client device (12) for data resources (16) in the data resource collection (20);
receive from a different client device (12) a second request for a second subset of the data resource collection (20) that is different than the first subset;
responsive to receiving the second request, extract the second subset from the data resource collection (20) that was retrieved from the data resource server (18) and stored in the request-agnostic cache (30) in response to the first request for the first subset; and
selectively return the second subset extracted from the data resource collection (20) as a response to the second request.

7. The intermediate proxy node (28) of claim 6, wherein the one or more processing circuits are configured to perform the method of any of claims 2-5.

8. A method implemented by an intermediate proxy node (28) via which client devices (12) request data resources (16) from a data resource server (18) that organizes the data resources (16) into different data resource collections (20), the method comprising:
receiving (200) from a client device (12) a first request for a first subset of a data resource collection (20);
identifying (210) a first part of the first subset as being stored in a request-agnostic cache (30) maintained by the intermediate proxy node (28) and a second part of the first subset as not being stored in the request-agnostic cache (30);
retrieving (220) the first part of the first subset from the request-agnostic cache (30) and the second part of the first subset from the data resource server (18);
returning (230) to the client device (12) the first subset as formed from the first and second parts retrieved; and
storing (240) the second part of the first subset in the request-agnostic cache (30) for serving other requests from the same or a different client device (12) for data resources (16) in the data resource collection (20), including a second request for a second subset of the data resource collection (20) that is different than the first subset.

9. The method of claim 8, wherein receiving the request for the first subset comprises receiving from the client device (12) a request for the data resource collection (20) in conjunction with one or more constraining parameters that constrain a response to the request to the first subset, and wherein retrieving the second part of the first subset from the data resource server (18) comprises selectively sending the request for the data resource collection (20) towards the data resource server (18) with those of the constraining parameters that are to constrain a response to the second part of the first subset, but without any of the constraining parameters that are to constrain a response to the first part of the first subset.

10. The method of claim 8 or 9, wherein, before the request for the first subset is received, the first part of the first subset is retrieved from the data resource server (18) and stored in the request-agnostic cache (30) in response to one or more requests from the same or a different client device (12) for one or more different subsets.

11. The method of any of claims 8 to 10, wherein the request comprises an HTTP request; and/or wherein the data resources (16) comprise splash images associated with different videos available for viewing in an IPTV system, and wherein the data resource server (18) organizes the splash images into different collections (20) that correspond to genres of the associated videos.

12. An intermediate proxy node (28) via which client devices (12) request data resources (16) from a data resource server (18) that organizes the data resources (16) into different data resource collections (20), the intermediate proxy node (28) comprising:
one or more communication interfaces configured to communicatively couple the intermediate proxy node (28) to a client device (12) and the data resource server (18); and
one or more processing circuits configured to:
receive (200) from a client device (12), via the one or more communication interfaces, a request for a first subset of a data resource collection (20);
identify (210) a first part of the requested first subset as being stored in a request-agnostic cache (30) maintained by the intermediate proxy node (28) and a second part of the requested first subset as not being stored in the request-agnostic cache (30);
retrieve (220) the first part of the requested first subset from the request-agnostic cache (30) and the second part of the requested first subset from the data resource server (18)
return (230) to the client device (12), via the one or more communication interfaces, the requested first subset as formed from the first and second parts retrieved; and
store (240) the second part of the first subset in the request-agnostic cache (30) for serving other requests from the same or a different client device (12) for data resources (16) in the data resource collection (20), including a second request for a second subset of the data resource collection (20) that is different than the first subset.

13. The intermediate proxy node (28) of claim 12, wherein the one or more processing circuits are configured to perform the method of any of claims 9-11.

14. A computer program product stored in a computer-readable memory, the computer program product containing program code, which, when executed, cause a processing circuit (86) to perform steps in a method according to any of claims 1 to 5 or 8 to 11.

## Patentansprüche

1. Verfahren, das von einem Proxyzwischenknoten (28) implementiert wird, über den Clientvorrichtungen (12) Datenressourcen (16) von einem Datenressourcenserver (18) anfordern, der die Datenressourcen (16) in verschiedenen Datenressourcensammlungen (20) organisiert, wobei das Verfahren Folgendes umfasst:
Empfangen (100) von einer Clientvorrichtung (12) einer ersten Anforderung für einen ersten Untersatz einer Datenressourcensammlung (20);
als Reaktion auf das Empfangen der ersten Anforderung Bestimmen (110), dass die Datenressourcensammlung (20) nicht in einem anforderungsagnostischen Zwischenspeicher (30) gespeichert ist, der vom Proxyzwischenknoten (28) unterhalten wird;
als Reaktion auf das Bestimmen Abrufen (120) der Datenressourcensammlung (20) vom Datenressourcenserver (18);
Extrahieren (130) des angeforderten ersten Untersatzes aus der abgerufenen Datenressourcensammlung (20) und selektives Zurückgeben dieses ersten Untersatzes an die Clientvorrichtung (12) als Reaktion auf die erste Anforderung;
Speichern (140) der Datenressourcensammlung (20) im anforderungsagnostischen Zwischenspeicher (30) zum Bedienen anderer Anforderungen von derselben oder einer anderen Clientvorrichtung (12) für Datenressourcen (16) in der Datenressourcensammlung (20);
Empfangen von einer anderen Clientvorrichtung (12) einer zweiten Anforderung für einen zweiten Untersatz der Datenressourcensammlung (20), der sich vom ersten Untersatz unterscheidet;
als Reaktion auf das Empfangen der zweiten Anforderung Extrahieren des zweiten Untersatzes aus der Datenressourcensammlung (20), die vom Datenressourcenserver (18) abgerufen und im anforderungsagnostischen Zwischenspeicher (30) als Reaktion auf die erste Anforderung für den ersten Untersatz gespeichert wurde; und
selektives Zurückgeben des zweiten Untersatzes, der aus der Datenressourcensammlung (20) als Reaktion auf die zweite Anforderung extrahiert wurde.

2. Verfahren nach Anspruch 1, wobei die erste und die zweite Anforderung von verschiedenen Arten von Clientvorrichtungen (12) mit mindestens einer von einer verschiedenen Anzeige-, Speicher- und Verarbeitungsfähigkeit empfangen werden.

3. Verfahren nach Anspruch 1 oder 2, wobei das Empfangen der ersten Anforderung für den ersten Untersatz das Empfangen von der Clientvorrichtung (12) einer Anforderung der Datenressourcensammlung (20) in Verbindung mit einem oder mehreren beschränkenden Parametern, die eine Antwort auf die erste Anforderung auf den ersten Untersatz beschränken, umfasst und wobei das Abrufen der Datenressourcensammlung (20) vom Datenressourcenserver (18) das Senden der ersten Anforderung für die Datenressourcensammlung (20) ohne den einen oder die mehreren beschränkenden Parameter an den Datenressourcenserver (18) umfasst.

4. Verfahren nach Anspruch 3, wobei das selektive Zurückgeben des ersten Untersatzes der Datenressourcensammlung (20) an die Clientvorrichtung (12) als Reaktion auf die erste Anforderung Folgendes umfasst:
Verarbeiten der vom Datenressourcenserver (18) empfangenen Datenressourcensammlung (20) gemäß dem einen oder den mehreren beschränkenden Parametern, um den ersten Untersatz aus der Datenressourcensammlung (20) zu extrahieren; und
Zurückgeben des extrahierten ersten Untersatzes als Reaktion auf die erste Anforderung.

5. Verfahren nach einem der Ansprüche 1 bis 4, wobei die erste Anforderung eine HTTP-Anforderung umfasst und/oder
wobei die Datenressourcen (16) Splash-Bilder umfassen, die mit verschiedenen Videos verknüpft sind, die in einem IPTV-System zum Ansehen verfügbar sind, und wobei der Datenressourcenserver (18) die Splash-Bilder in verschiedenen Sammlungen (20) organisiert, die Genres der verknüpften Videos entsprechen.

6. Proxyzwischenknoten (28), über den Clientvorrichtungen (12) Datenressourcen (16) von einem Datenressourcenserver (18) anfordern, der die Datenressourcen (16) in verschiedenen Datenressourcensammlungen (20) organisiert, wobei der Proxyzwischenknoten (28) Folgendes umfasst:
eine oder mehrere Kommunikationsschnittstellen, die dazu ausgelegt sind, den Proxyzwischenknoten (28) kommunikativ an eine Clientvorrichtung (12) und den Datenressourcenserver (18) zu koppeln; und
eine oder mehrere Verarbeitungsschaltungen, die zu Folgendem ausgelegt sind:
Empfangen (100) von der Clientvorrichtung (12) einer ersten Anforderung für einen ersten Untersatz einer Datenressourcensammlung (20) über die eine oder die mehreren Kommunikationsschnittstellen;
als Reaktion auf das Empfangen der ersten Anforderung Bestimmen (110), dass die Datenressourcensammlung (20) nicht in einem anforderungsagnostischen Zwischenspeicher (30) gespeichert ist, der vom Proxyzwischenknoten (28) unterhalten wird;
als Reaktion auf das Bestimmen Abrufen (120) der Datenressourcensammlung (20) vom Datenressourcenserver (18);
Extrahieren (130) des angeforderten ersten Untersatzes aus der abgerufenen Datenressourcensammlung (20) und selektives Zurückgeben dieses ersten Untersatzes über die eine oder die mehreren Kommunikationsschnittstellen an die Clientvorrichtung (12) als Reaktion auf die erste Anforderung;
Speichern (140) der Datenressourcensammlung (20) im anforderungsagnostischen Zwischenspeicher (30) zum Bedienen anderer Anforderungen von derselben oder einer anderen Clientvorrichtung (12) für Datenressourcen (16) in der Datenressourcensammlung (20);
Empfangen von einer anderen Clientvorrichtung (12) einer zweiten Anforderung für einen zweiten Untersatz der Datenressourcensammlung (20), der sich vom ersten Untersatz unterscheidet;
als Reaktion auf das Empfangen der zweiten Anforderung Extrahieren des zweiten Untersatzes aus der Datenressourcensammlung (20), die vom Datenressourcenserver (18) abgerufen und im anforderungsagnostischen Zwischenspeicher (30) als Reaktion auf die erste Anforderung für den ersten Untersatz gespeichert wurde; und
selektives Zurückgeben des zweiten Untersatzes, der aus der Datenressourcensammlung (20) als Reaktion auf die zweite Anforderung extrahiert wurde.

7. Proxyzwischenknoten (28) nach Anspruch 6, wobei die eine oder die mehreren Verarbeitungsschaltungen dazu ausgelegt sind, das Verfahren nach einem der Ansprüche 2-5 durchzuführen.

8. Verfahren, das von einem Proxyzwischenknoten (28) implementiert wird, über den Clientvorrichtungen (12) Datenressourcen (16) von einem Datenressourcenserver (18) anfordern, der die Datenressourcen (16) in verschiedenen Datenressourcensammlungen (20) organisiert, wobei das Verfahren Folgendes umfasst:
Empfangen (200) von einer Clientvorrichtung (12) einer ersten Anforderung für einen ersten Untersatz einer Datenressourcensammlung (20);
Identifizieren (210) eines ersten Teils des ersten Untersatzes als in einem anforderungsagnostischen Zwischenspeicher (30), der vom Proxyzwischenknoten (28) unterhalten wird, gespeichert und eines zweiten Teils des ersten Untersatzes als nicht im anforderungsagnostischen Zwischenspeicher (30) gespeichert;
Abrufen (220) des ersten Teils des ersten Untersatzes aus dem anforderungsagnostischen Zwischenspeicher (30) und des zweiten Teils des ersten Untersatzes vom Datenressourcenserver (18);
Zurückgeben (230) des ersten Untersatzes, wie aus dem ersten und zweiten abgerufenen Teil gebildet, an die Clientvorrichtung (12) und
Speichern (240) des zweiten Teils des ersten Untersatzes im anforderungsagnostischen Zwischenspeicher (30) zum Bedienen anderer Anforderungen von derselben oder einer anderen Clientvorrichtung (12) für Datenressourcen (16) in der Datenressourcensammlung (20), einschließlich einer zweiten Anforderung für einen zweiten Untersatz der Datenressourcensammlung (20), der sich vom ersten Untersatz unterscheidet.

9. Verfahren nach Anspruch 8, wobei das Empfangen der Anforderung für den ersten Untersatz das Empfangen von der Clientvorrichtung (12) einer Anforderung für die Datenressourcensammlung (20) in Verbindung mit einem oder mehreren beschränkenden Parametern, die eine Antwort auf die Anforderung auf den ersten Untersatz beschränken, umfasst und wobei das Abrufen des zweiten Teils des ersten Untersatzes vom Datenressourcenserver (18) das selektive Senden der Anforderung für die Datenressourcensammlung (20) an den Datenressourcenserver (18) mit jenen der beschränkenden Parameter umfasst, die eine Antwort auf den zweiten Teil des ersten Untersatzes beschränken sollen, aber mit keinen der beschränkenden Parameter, die eine Antwort auf den ersten Teil des ersten Untersatzes beschränken sollen.

10. Verfahren nach Anspruch 8 oder 9, wobei, bevor die Anforderung für den ersten Untersatz empfangen wird, als Reaktion auf eine oder mehrere Anforderungen von derselben oder einer anderen Clientvorrichtung (12) für einen oder mehrere verschiedene Untersätze der erste Teil des ersten Untersatzes vom Datenressourcenserver (18) abgerufen und im anforderungsagnostischen Zwischenspeicher (30) gespeichert wird.

11. Verfahren nach einem der Ansprüche 8 bis 10, wobei die Anforderung eine HTTP-Anforderung umfasst und/oder
wobei die Datenressourcen (16) Splash-Bilder umfassen, die mit verschiedenen Videos verknüpft sind, die in einem IPTV-System zum Ansehen verfügbar sind, und wobei der Datenressourcenserver (18) die Splash-Bilder in verschiedenen Sammlungen (20) organisiert, die Genres der verknüpften Videos entsprechen.

12. Proxyzwischenknoten (28), über den Clientvorrichtungen (12) Datenressourcen (16) von einem Datenressourcenserver (18) anfordern, der die Datenressourcen (16) in verschiedenen Datenressourcensammlungen (20) organisiert, wobei der Proxyzwischenknoten (28) Folgendes umfasst:
eine oder mehrere Kommunikationsschnittstellen, die dazu ausgelegt sind, den Proxyzwischenknoten (28) kommunikativ an eine Clientvorrichtung (12) und den Datenressourcenserver (18) zu koppeln; und
eine oder mehrere Verarbeitungsschaltungen, die zu Folgendem ausgelegt sind:
Empfangen (200) von einer Clientvorrichtung (12) einer Anforderung für einen ersten Untersatz einer Datenressourcensammlung (20) über die eine oder die mehreren Kommunikationsschnittstellen;
Identifizieren (210) eines ersten Teils des angeforderten ersten Untersatzes als in einem anforderungsagnostischen Zwischenspeicher (30), der vom Proxyzwischenknoten (28) unterhalten wird, gespeichert und eines zweiten Teils des angeforderten ersten Untersatzes als nicht im anforderungsagnostischen Zwischenspeicher (30) gespeichert;
Abrufen (220) des ersten Teils des angeforderten ersten Untersatzes aus dem anforderungsagnostischen Zwischenspeicher (30) und des zweiten Teils des angeforderten ersten Untersatzes vom Datenressourcenserver (18);
Zurückgeben (230) des ersten Untersatzes, wie aus dem ersten und zweiten abgerufenen Teil gebildet, über die eine oder die mehreren Kommunikationsschnittstellen an die Clientvorrichtung (12) und
Speichern (240) des zweiten Teils des ersten Untersatzes im anforderungsagnostischen Zwischenspeicher (30) zum Bedienen anderer Anforderungen von derselben oder einer anderen Clientvorrichtung (12) für Datenressourcen (16) in der Datenressourcensammlung (20), einschließlich einer zweiten Anforderung für einen zweiten Untersatz der Datenressourcensammlung (20), der sich vom ersten Untersatz unterscheidet.

13. Proxyzwischenknoten (28) nach Anspruch 12, wobei die eine oder die mehreren Verarbeitungsschaltungen dazu ausgelegt sind, das Verfahren nach einem der Ansprüche 9-11 durchzuführen.

14. Computerprogrammprodukt, das in einem computerlesbaren Speicher gespeichert ist, wobei das Computerprogrammprodukt Programmcode enthält, der, wenn er ausgeführt wird, bewirkt, dass eine Verarbeitungsschaltung (86) Schritte in einem Verfahren gemäß einem der Ansprüche 1 bis 5 oder 8 bis 11 durchführt.

## Revendications

1. Procédé mis en oeuvre par un noeud mandataire intermédiaire (28) par l'intermédiaire duquel des dispositifs clients (12) requièrent des ressources de données (16) auprès d'un serveur de ressources de données (18) qui organise les ressources de données (16) en différentes collections de ressources de données (20), le procédé comprenant les étapes ci-dessous consistant à :
recevoir (100), en provenance d'un dispositif client (12), une première requête concernant un premier sous-ensemble d'une collection de ressources de données (20) ;
en réponse à la réception de la première requête, déterminer (110) que la collection de ressources de données (20) n'est pas stockée dans une antémémoire indifférente aux requêtes (30) maintenue par le noeud mandataire intermédiaire (28) ;
en réponse à ladite étape de détermination, récupérer (120) la collection de ressources de données (20) auprès du serveur de ressources de données (18) ;
extraire (130) le premier sous-ensemble requis de la collection de ressources de données récupérée (20) et retourner sélectivement ce premier sous-ensemble au dispositif client (12) en réponse à la première requête ;
stocker (140) la collection de ressources de données (20) dans l'antémémoire indifférente aux requêtes (30) en vue de desservir d'autres requêtes en provenance du même dispositif client ou d'un dispositif client distinct (12) concernant des ressources de données (16) dans la collection de ressources de données (20) ;
recevoir, en provenance d'un dispositif client distinct (12), une seconde requête concernant un second sous-ensemble de la collection de ressources de données (20) qui est différent du premier sous-ensemble ;
en réponse à la réception de la seconde requête, extraire le second sous-ensemble de la collection de ressources de données (20) qui a été récupérée à partir du serveur de ressources de données (18) et stockée dans l'antémémoire indifférente aux requêtes (30) en réponse à la première requête concernant le premier sous-ensemble ; et
retourner sélectivement le second sous-ensemble extrait de la collection de ressources de données (20) en réponse à la seconde requête.

2. Procédé selon la revendication 1, dans lequel les première et seconde requêtes sont reçues en provenance de différents types de dispositifs clients (12) présentant au moins l'une parmi des capacités d'affichage, de mémoire et de traitement différentes.

3. Procédé selon la revendication 1 ou 2, dans lequel l'étape consistant à recevoir la première requête concernant le premier sous-ensemble consiste à recevoir, en provenance du dispositif client (12), une requête concernant la collection de ressources de données (20), conjointement avec un ou plusieurs paramètres contraignants qui restreignent une réponse à la première requête au premier sous-ensemble, et dans lequel l'étape consistant à récupérer la collection de ressources de données (20) auprès du serveur de ressources de données (18) comprend l'étape consistant à envoyer la première requête concernant la collection de ressources de données (20), sans ledit un ou lesdits plusieurs paramètres contraignants, vers le serveur de ressources de données (18).

4. Procédé selon la revendication 3, dans lequel l'étape consistant à retourner sélectivement le premier sous-ensemble de la collection de ressources de données (20) au dispositif client (12) en réponse à la première requête comprend les étapes ci-dessous consistant à :
traiter la collection de ressources de données (20) reçue en provenance du serveur de ressources de données (18) conformément audit un ou auxdits plusieurs paramètres contraignants afin d'extraire le premier sous-ensemble de la collection de ressources de données (20) ; et
retourner le premier sous-ensemble extrait en réponse à la première requête.

5. Procédé selon l'une quelconque des revendications 1 à 4, dans lequel la première requête comporte une requête de protocole HTTP ; et/ou
dans lequel les ressources de données (16) comportent des images de démarrage associées à différentes vidéos disponibles à des fins de visionnement dans un système IPTV, et dans lequel le serveur de ressources de données (18) organise les images de démarrage en différentes collections (20) qui correspondent à des genres des vidéos associées.

6. Noeud mandataire intermédiaire (28) par l'intermédiaire duquel des dispositifs clients (12) requièrent des ressources de données (16) auprès d'un serveur de ressources de données (18) qui organise les ressources de données (16) en différentes collections de ressources de données (20), le noeud mandataire intermédiaire (28) comprenant :
une ou plusieurs interfaces de communication configurées de manière à coupler en communication le noeud mandataire intermédiaire (28) à un dispositif client (12) et au serveur de ressources de données (18) ; et
un ou plusieurs circuits de traitement configurés de manière à :
recevoir (100), en provenance du dispositif client (12), par l'intermédiaire de ladite une ou desdites plusieurs interfaces de communication, une première requête concernant un premier sous-ensemble d'une collection de ressources de données (20) ;
en réponse à la réception de la première requête, déterminer (110) que la collection de ressources de données (20) n'est pas stockée dans une antémémoire indifférente aux requêtes (30) maintenue par le noeud mandataire intermédiaire (28) ;
en réponse à ladite étape de détermination, récupérer (120) la collection de ressources de données (20) auprès du serveur de ressources de données (18) ;
extraire (130) le premier sous-ensemble requis de la collection de ressources de données récupérée (20) et retourner sélectivement ce premier sous-ensemble au dispositif client (12), par l'intermédiaire de ladite une ou desdites plusieurs interfaces de communication, en réponse à la première requête ;
stocker (140) la collection de ressources de données (20) dans l'antémémoire indifférente aux requêtes (30) en vue de desservir d'autres requêtes en provenance du même dispositif client ou d'un dispositif client distinct (12) concernant des ressources de données (16) dans la collection de ressources de données (20) ;
recevoir, en provenance d'un dispositif client distinct (12), une seconde requête concernant un second sous-ensemble de la collection de ressources de données (20) qui est différent du premier sous-ensemble ;
en réponse à la réception de la seconde requête, extraire le second sous-ensemble de la collection de ressources de données (20) qui a été récupérée à partir du serveur de ressources de données (18) et stockée dans l'antémémoire indifférente aux requêtes (30) en réponse à la première requête concernant le premier sous-ensemble ; et
retourner sélectivement le second sous-ensemble extrait de la collection de ressources de données (20) en réponse à la seconde requête.

7. Noeud mandataire intermédiaire (28) selon la revendication 6, dans lequel ledit un ou lesdits plusieurs circuits de traitement sont configurés de manière à mettre en oeuvre le procédé selon l'une quelconque des revendications 2 à 5.

8. Procédé mis en oeuvre par un noeud mandataire intermédiaire (28) par l'intermédiaire duquel des dispositifs clients (12) requièrent des ressources de données (16) auprès d'un serveur de ressources de données (18) qui organise les ressources de données (16) en différentes collections de ressources de données (20), le procédé comprenant les étapes ci-dessous consistant à :
recevoir (200), en provenance d'un dispositif client (12), une première requête concernant un premier sous-ensemble d'une collection de ressources de données (20) ;
identifier (210) une première partie du premier sous-ensemble comme étant stockée dans une antémémoire indifférente aux requêtes (30) maintenue par le noeud mandataire intermédiaire (28), et une seconde partie du premier sous-ensemble comme n'étant pas stockée dans l'antémémoire indifférente aux requêtes (30) ;
récupérer (220) la première partie du premier sous-ensemble auprès de l'antémémoire indifférente aux requêtes (30), et la seconde partie du premier sous-ensemble auprès du serveur de ressources de données (18) ;
retourner (230) au dispositif client (12), le premier sous-ensemble tel que formé à partir des première et seconde parties récupérées ; et
stocker (240) la seconde partie du premier sous-ensemble dans l'antémémoire indifférente aux requêtes (30) en vue de desservir d'autres requêtes en provenance du même dispositif client ou d'un dispositif client distinct (12) concernant des ressources de données (16) dans la collection de ressources de données (20), y compris une seconde requête concernant un second sous-ensemble de la collection de ressources de données (20) qui est différent du premier sous-ensemble.

9. Procédé selon la revendication 8, dans lequel l'étape de réception de la requête concernant le premier sous-ensemble consiste à recevoir, en provenance du dispositif client (12), une requête concernant la collection de ressources de données (20), conjointement avec un ou plusieurs paramètres contraignants qui restreignent une réponse à la requête au premier sous-ensemble, et dans lequel l'étape de récupération de la seconde partie du premier sous-ensemble à partir du serveur de ressources de données (18) comporte l'étape consistant à envoyer sélectivement la requête concernant la collection de ressources de données (20) vers le serveur de ressources de données (18) avec ceux des paramètres contraignants qui sont destinés à restreindre une réponse à la seconde partie du premier sous-ensemble, mais sans aucun des paramètres contraignants qui sont destinés à restreindre une réponse à la première partie du premier sous-ensemble.

10. Procédé selon la revendication 8 ou 9, dans lequel, avant la réception de la requête concernant le premier sous-ensemble, la première partie du premier sous-ensemble est récupérée auprès du serveur de ressources de données (18) et stockée dans l'antémémoire indifférente aux requêtes (30) en réponse à une ou plusieurs requêtes en provenance du même dispositif client ou d'un dispositif client distinct (12) concernant un ou plusieurs sous-ensembles distincts.

11. Procédé selon l'une quelconque des revendications 8 à 10, dans lequel la requête comporte une requête de protocole HTTP ; et/ou
dans lequel les ressources de données (16) comportent des images de démarrage associées à différentes vidéos disponibles à des fins de visionnement dans un système IPTV, et dans lequel le serveur de ressources de données (18) organise les images de démarrage en différentes collections (20) qui correspondent à des genres des vidéos associées.

12. Noeud mandataire intermédiaire (28) par l'intermédiaire duquel des dispositifs clients (12) requièrent des ressources de données (16) auprès d'un serveur de ressources de données (18) qui organise les ressources de données (16) en différentes collections de ressources de données (20), le noeud mandataire intermédiaire (28) comprenant :
une ou plusieurs interfaces de communication configurées de manière à coupler en communication le noeud mandataire intermédiaire (28) à un dispositif client (12) et au serveur de ressources de données (18) ; et
un ou plusieurs circuits de traitement configurés de manière à :
recevoir (200), en provenance d'un dispositif client (12), par l'intermédiaire de ladite une ou desdites plusieurs interfaces de communication, une requête concernant un premier sous-ensemble d'une collection de ressources de données (20) ;
identifier (210) une première partie du premier sous-ensemble requis comme étant stockée dans une antémémoire indifférente aux requêtes (30) maintenue par le noeud mandataire intermédiaire (28), et une seconde partie du premier sous-ensemble requis comme n'étant pas stockée dans l'antémémoire indifférente aux requêtes (30) ;
récupérer (220) la première partie du premier sous-ensemble requis auprès de l'antémémoire indifférente aux requêtes (30), et la seconde partie du premier sous-ensemble requis auprès du serveur de ressources de données (18) ;
retourner (230) au dispositif client (12), par l'intermédiaire de ladite une ou desdites plusieurs interfaces de communication, le premier sous-ensemble requis tel que formé à partir des première et seconde parties récupérées ; et
stocker (240) la seconde partie du premier sous-ensemble dans l'antémémoire indifférente aux requêtes (30) en vue de desservir d'autres requêtes en provenance du même dispositif client ou d'un dispositif client distinct (12) concernant des ressources de données (16) dans la collection de ressources de données (20), y compris une seconde requête concernant un second sous-ensemble de la collection de ressources de données (20) qui est différent du premier sous-ensemble.

13. Noeud mandataire intermédiaire (28) selon la revendication 12, dans lequel ledit un ou lesdits plusieurs circuits de traitement sont configurés de manière à mettre en oeuvre le procédé selon l'une quelconque des revendications 9 à 11.

14. Produit-programme informatique stocké dans une mémoire lisible par ordinateur, le produit-programme informatique contenant un code de programme, qui, lorsqu'il est exécuté, amène un circuit de traitement (86) à mettre en oeuvre des étapes dans un procédé selon l'une quelconque des revendications 1 à 5 ou 8 à 11.
